# EUROPÄISCHE PATENTANMELDUNG

(11) **EP 4 099 071 A1**
(43) Veröffentlichungstag der Anmeldung: **07.12.2022**
(21) Anmeldenummer: 22155872.9
(22) Anmeldetag: 09.02.2022
(51) Int. Cl.: G02B 6/44

(54) **BEFESTIGUNGSVORRICHTUNG ZUR BEFESTIGUNG EINES ELEKTRONISCHEN GERÄTS AN EINER WAND**

(30) Priorität: 04.06.2021 DE 102021114435
(71) Anmelder: METZ CONNECT TECH GmbH, 78176 Blumberg (DE)
(72) Erfinder: Müller, Hartmut, 78199 Bräunlingen (DE); Deschle, Marko, 78176 Blumberg (DE)
(74) Vertreter: Westphal, Mussgnug & Partner Patentanwälte mbB

(57) **Zusammenfassung**

Die Erfindung betrifft eine Befestigungsvorrichtung (20) zur Befestigung eines elektronischen Geräts (200) an einer Wand, welche eine Grundplatte (12) mit einer Vorderseite (14), einer Rückseite (16) und einer Seitenkante (18) aufweist, in welcher wenigstens zwei Wandbefestigungsöffnungen (20), die jeweils ausgehend von der Rückseite (16) ausgebildet sind, und wenigstens zwei Gerätebefestigungsöffnungen (24), die jeweils ausgehend von der Vorderseite (14) ausgebildet sind und einen Hinterschnitt (26) aufweisen, angeordnet sind, wobei die Grundplatte (12) an der Vorderseite (14) wenigstens einen Aufwickelvorsprung (28) für einen Lichtwellenleiter aufweist.

## Beschreibung

Bekannt sind Befestigungsvorrichtungen zur Befestigung eines elektronischen Geräts, beispielsweise einer Anschlussdose für Lichtwellenleiter, an einer Wand, welche eine Grundplatte aufweist, in welcher wenigstens zwei Wandbefestigungsöffnungen, die jeweils ausgehend von der Rückseite ausgebildet sind, und wenigstens zwei Gerätebefestigungsöffnungen, die jeweils ausgehend von der Vorderseite ausgebildet sind und einen Hinterschnitt aufweisen, angeordnet sind. Über die Wandbefestigungsöffnungen kann die Grundplatte an der Wand befestigt, beispielsweise an die Wand geschraubt, werden. Anschließend kann das Gerät über die Gerätebefestigungsöffnungen an der Grundplatte befestigt, beispielsweise mit entsprechenden Einhängeelementen in die Gerätebefestigungsöffnungen eingehängt werden. Das Gerät ist üblicherweise an einen an beliebiger Stelle aus der Wand tretenden Lichtwellenleiter angeschlossen, welcher nach Montage zwischen der Austrittsstelle in der Wand und dem Gerät über der Wand verlaufend angeordnet ist.

Die Aufgabe der Erfindung besteht darin, eine gattungsgemäße Befestigungsvorrichtung weiterzubilden derart, dass ein kompakter Aufbau ermöglicht wird.

Die Aufgabe wird erfindungsgemäß gelöst durch eine Befestigungsvorrichtung zur Befestigung eines elektronischen Geräts an einer Wand mit den Merkmalen des Patentanspruchs 1.

Vorteilhafte Ausgestaltungen und Weiterbildungen sind in den abhängigen Ansprüchen angegeben.

Die erfindungsgemäße Befestigungsvorrichtung zur Befestigung eines elektronischen Geräts an einer Wand, welche eine Grundplatte mit einer Vorderseite, einer Rückseite und einer Seitenkante aufweist, in welcher wenigstens zwei Wandbefestigungsöffnungen, die jeweils ausgehend von der Rückseite ausgebildet sind, und wenigstens zwei Gerätebefestigungsöffnungen, die jeweils ausgehend von der Vorderseite ausgebildet sind und einen Hinterschnitt aufweisen, angeordnet sind, zeichnet sich dadurch aus, dass die Grundplatte an der Vorderseite wenigstens einen Aufwickelvorsprung für einen Lichtwellenleiter aufweist. Ein derartiger Aufwickelvorsprung ermöglicht die Anordnung eines Lichtwellenleiters in dem Zwischenraum zwischen Grundplatte und dem an der Grundplatte angeordneten Gerät, so dass ein über der Wand zwischen der Austrittsstelle in der Wand und dem Gerät verlaufender Lichtwellenleiter vermieden werden kann. Das Gerät kann insbesondere in der Nähe oder sogar über der Austrittsstelle in der Wand montiert werden, was einen kompakten Aufbau ermöglicht.

Vorzugsweise ist der Aufwickelvorsprung als zylindrischer oder kegelstumpf- oder pyramidenstumpfförmiger Vorsprung ausgebildet, was eine einfache und den Lichtwellenleiter schonende Aufwicklung des Lichtwellenleiters ermöglicht. Dabei kann der Aufwickelvorsprung einen kreisförmigen oder ovalen Querschnitt oder auch einen rechteckigen, insbesondere quadratischen, Querschnitt mit abgerundeten Ecken aufweisen.

Gemäß einer bevorzugten Ausführungsform der Erfindung ist an dem der Grundplatte abgewandten Ende des Aufwickelvorsprungs wenigstens ein Niederhalteelement angeordnet. Ein derartiges Niederhalteelement kann ein Einklemmen des Lichtwellenleiters zwischen der Grundplatte und dem an der Grundplatte montierten Gerät verhindern.

Vorteilhafterweise weist die Grundplatte zwei Aufwickelvorsprünge auf, was eine für Lichtwellenleiter günstige Aufwicklung in Form einer Acht ermöglicht.

Gemäß einer vorteilhaften Weiterbildung der Erfindung ist zwischen den beiden Aufwickelvorsprüngen wenigstens ein Niederhalteelement angeordnet und sind vorzugsweise zwei Niederhalteelemente angeordnet. Diese können das Einklemmen des Lichtwellenleiters zwischen der Grundplatte und dem an der Grundplatte befestigten Gerät auch in dem Zwischenbereich zwischen den beiden Auswickelvorsprüngen insbesondere in dem Fall, dass der Lichtwellenleiter in Form einer Acht auf die beiden Aufwickelvorsprünge gewickelt ist, verhindern.

Vorzugsweise ist der Aufwickelvorsprung beabstandet zu der Seitenkante der Grundplatte angeordnet, um ein seitliches Überstehen des aufgewickelten Lichtwellenleiters vermeiden zu können.

Gemäß einer vorteilhaften Weiterbildung der Erfindung ist ausgehend von der Vorderseite wenigstens eine Vertiefung, vorzugsweise mehrere Vertiefungen, in der Grundplatte angeordnet. Eine derartige Vertiefung bewirkt, dass die Auflagefläche der Rückwand des zu montierenden Geräts an der Grundplatte verringert werden kann und eine Wärmebildung an der Rückseite des Geräts verringert oder vermieden werden kann.

Eine besonders bevorzugte Ausgestaltung der Erfindung sieht vor, dass der Aufwickelvorsprung in der Vertiefung in der Grundplatte angeordnet ist, insbesondere derart, dass das der Grundplatte abgewandte Ende des Aufwickelvorsprungs nicht über eine Auflagefläche der Grundplatte für das Gerät hinausragt.

Eine derartige Ausgestaltung ermöglicht einen besonders kompakten Aufbau der Befestigungsvorrichtung.

Eine besonders bevorzugte Ausführungsform der Erfindung sieht vor, dass die Seitenkante zumindest abschnittsweise offen ausgebildet ist. Eine derartige Ausgestaltung kann das Aufwickeln des Lichtwellenleiters auf den Aufwickelvorsprung erleichtern.

Vorzugsweise ist insbesondere ausgehend von einer Seitenkante eine Ausnehmung in der Grundplatte angeordnet. Diese Ausnehmung kann eine Anordnung der Grundplatte direkt über einer Austrittsstelle des Lichtwellenleiters in der Wand und damit einen besonders kompakten Aufbau ermöglichen.

Vorteilhafterweise sind die Wandbefestigungsöffnungen von der Vorderseite zur Rückseite durchgehend ausgebildet, wodurch die Montage der Grundplatte an der Wand vereinfacht werden kann.

Eine vorteilhafte Ausgestaltung der Erfindung sieht vor, dass um wenigstens eine der Wandbefestigungsöffnungen zumindest abschnittsweise ein Steg angeordnet ist. Ein derartiger Steg kann die Gefahr eines Kontakts eines in der Wandbefestigungsöffnung angeordneten Schraubenkopfes, welcher zu einem Verhaken oder Hängenbleiben führen könnte, verringern.

Die Erfindung wird anhand eines in den Figuren dargestellten Ausführungsbeispiels näher erläutert. Es zeigen
- Figur 1: eine perspektivische Ansicht mit Blick auf die Vorderseite eines Ausführungsbeispiels einer erfindungs-gemäßen Befestigungsvorrichtung,
- Figur 2: eine weitere perspektivische Ansicht mit Blick auf die Rückseite der Befestigungsvorrichtung gemäß Figur 1 und
- Figur 3: eine perspektivische Ansicht der Befestigungsvorrichtung gemäß Figur 1 mit einem an der Befestigungsvorrichtung anzuordnenden Gerät.

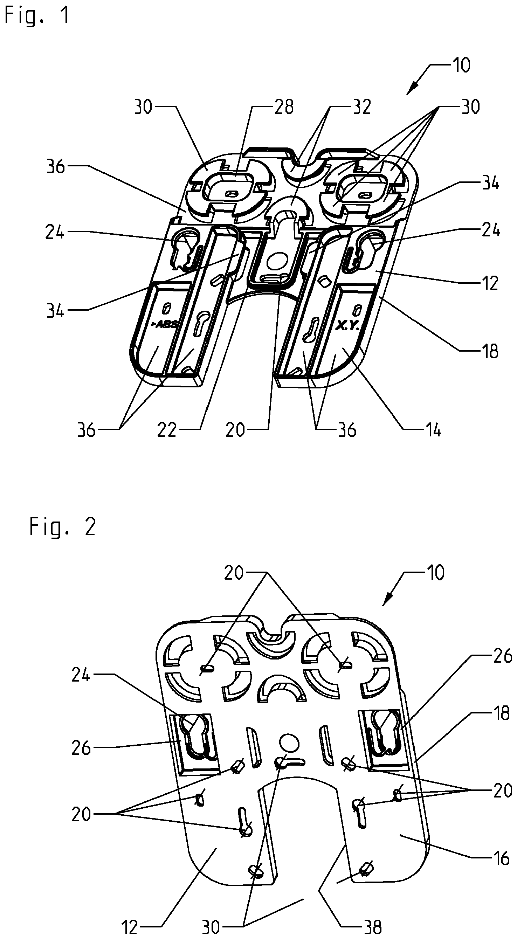

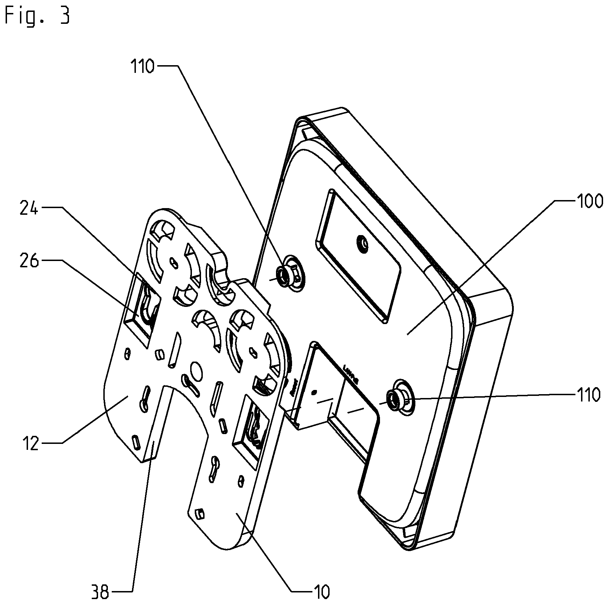

Die Figuren 1 bis 3 zeigen verschiedene Ansichten eines Ausführungsbeispiels einer erfindungsgemäßen Befestigungsvorrichtung 10 zur Befestigung eines elektronischen Geräts 100, welches in Figur 3 dargestellt ist, an einer Wand.

Die Befestigungsvorrichtung 10 weist eine Grundplatte 12 mit einer Vorderseite 14, einer Rückseite 16 und einer umlaufenden Seitenkante 18 auf.

In der Grundplatte 12 sind wenigstens zwei Wandbefestigungsöffnungen 20, die jeweils ausgehend von der Rückseite 16 ausgebildet sind, angeordnet. Das vorliegende Ausführungsbeispiel zeigt mehrere Wandbefestigungsöffnungen 20, die eine Befestigung entweder direkt an der Wand oder an einer in der Wand angeordneten Unterputzdose ermöglichen. In der Grundplatte 12 kann insbesondere ausgehend von der Seitenkante 18 eine Ausnehmung 38 angeordnet sein, welche beispielsweise eine Anordnung der Grundplatte 12 direkt über einer Austrittsstelle eines Lichtwellenleiters in der Wand oder direkt über einer in der Wand angeordneten Unterputzdose ermöglicht.

Die Wandbefestigungsöffnungen 20 sind insbesondere von der Vorderseite 14 zur Rückseite 16 durchgehend ausgebildet, was eine einfache Befestigung der Grundplatte 12 an der Wand mittels einer durch die Wandbefestigungsöffnung 20 geführten Schraube ermöglichen kann. Es kann zumindest abschnittsweise um eine oder mehrere der Wandbefestigungsöffnungen 20 ein Steg 22 angeordnet sein, welcher einen Kontakt zu einem in der Wandbefestigungsöffnung 20 angeordneten Schraubenkopf verhindern kann.

Die Grundplatte 12 weist wenigstens zwei Gerätebefestigungsöffnungen 24, die jeweils ausgehend von der Vorderseite 14 ausgebildet sind und von der Vorderseite 14 gesehen einen Hinterschnitt 26 aufweisen, auf. Die Gerätebefestigungsöffnungen 24 können insbesondere schlüssellochartig ausgebildet sein, was in Kombination mit dem Hinterschnitt 26 ein einfaches Einhängen des Geräts 100 mittels an dem Gerät 100 angeordneten Einhängeelement 110 ermöglicht (vgl. Figur 3). Die Einhängeelemente 110 können dabei beispielsweise einen T-förmigen Längsschnitt aufweisen. In dem schmaleren Bereich der schlüssellochartig ausgebildeten Gerätebefestigungsöffnungen 24 können Rastkanten angeordnet sein, hinter welchen die Einhängeelemente 110 verrasten können.

An der Vorderseite 14 der Grundplatte 12 ist wenigstens ein Aufwickelvorsprung 28 für einen Lichtwellenleiter angeordnet. Das vorliegende Ausführungsbeispiel weist zwei Aufwickelvorsprünge 28 an der Vorderseite 14 der Grundplatte 12 auf.

Der Aufwickelvorsprung 28 kann als zylindrischer oder kegelstumpf- oder pyramidenstumpfförmiger Vorsprung ausgebildet sein und ist in dem vorliegenden Ausführungsbeispiel zylindrisch ausgebildet. Dabei kann der Aufwickelvorsprung 28 einen kreisförmigen oder ovalen Querschnitt oder auch rechteckigen, insbesondere quadratischen, Querschnitt mit abgerundeten Ecken aufweisen. An dem der Grundplatte 12 abgewandten Ende des Aufwickelvorsprungs 28 kann wenigstens ein Niederhalteelement 30 angeordnet sein. Vorliegend weist jeder der Aufwickelvorsprünge 28 vier Niederhalteelemente 30 auf, welche nach Art eines Flügels ausgebildet sein können. Insbesondere können die Niederhalteelemente 30 radial vorstehend an dem Aufwickelvorsprung 28 angeordnet sein.

Bei zwei Aufwickelvorsprüngen 28 können zwischen den beiden Aufwickelvorsprünge 28 zusätzlich wenigstens ein Niederhalteelement 32, vorzugsweise zwei Niederhalteelemente 32, angeordnet sein. Diese können die Führung des Lichtwellenleiters in Form einer Acht um die beiden Aufwickelvorsprünge 28 begünstigen und ein Niederhalten des Lichtwellenleiters im Bereich zwischen der beiden Aufwickelvorsprünge 28 ermöglichen.

Es besteht die Möglichkeit weitere Niederhalteelemente 34 an der Vorderseite der Grundplatte 12 anzuordnen, um den Lichtwellenleiter beispielsweise entlang eines Zuführpfads zu den Aufwickelvorsprüngen 28 ebenfalls niederhalten zu können.

Der Aufwickelvorsprung 28 ist insbesondere beabstandet zu der Seitenkante 18 der Grundplatte 12 angeordnet. Die Seitenkante 18 kann zumindest abschnittsweise offen ausgebildet sein, insbesondere in Bereichen radial angrenzend an den Aufwickelvorsprung 28 oder die Aufwickelvorsprünge 28, um das Aufwickeln zu erleichtern.

Ausgehend von der Vorderseite 14 kann wenigstens eine Vertiefung in der Grundplatte 12 angeordnet sein, um die Auflagefläche zwischen der Grundplatte 12 und dem Gerät 100 verringern zu können. Vorteilhafterweise sind mehrere derartige Vertiefungen 36 vorgesehen.

Insbesondere ist der Aufwickelvorsprung 28 in einer der Vertiefungen 36 in der Grundplatte 12 angeordnet, insbesondere derart, dass das der Grundplatte 12 abgewandte Ende des Aufwickelvorsprungs 28 nicht über eine Auflagefläche der Grundplatte 12 für das Gerät 100 hinausragt.

### Bezugszeichenliste

- 10: Befestigungsöffnung
- 12: Grundplatte
- 14: Vorderseite
- 16: Rückseite
- 18: Seitenkante
- 20: Wandbefestigungsöffnung
- 22: Steg
- 24: Gerätebefestigungsöffnung
- 26: Hinterschnitt
- 28: Aufwickelvorsprung
- 30: Niederhalteelement
- 32: Niederhalteelement
- 34: Niederhalteelement
- 36: Vertiefung
- 38: Ausnehmung
- 100: Gerät
- 110: Einhängeelement

## Patentansprüche

1. Befestigungsvorrichtung (20) zur Befestigung eines elektronischen Geräts (200) an einer Wand, welche eine Grundplatte (12) mit einer Vorderseite (14), einer Rückseite (16) und einer Seitenkante (18) aufweist, in welcher wenigstens zwei Wandbefestigungsöffnungen (20), die jeweils ausgehend von der Rückseite (16) ausgebildet sind, und wenigstens zwei Gerätebefestigungsöffnungen (24), die jeweils ausgehend von der Vorderseite (14) ausgebildet sind und einen Hinterschnitt (26) aufweisen, angeordnet sind, **dadurch gekennzeichnet, dass** die Grundplatte (12) an der Vorderseite (14) wenigstens einen Aufwickelvorsprung (28) für einen Lichtwellenleiter aufweist.

2. Befestigungsvorrichtung nach Anspruch 1,
**dadurch gekennzeichnet, dass** der Aufwickelvorsprung (28) als zylindrischer oder kegelstumpf- oder pyramidenstumpfförmiger Vorsprung ausgebildet ist.

3. Befestigungsvorrichtung nach einem der vorhergehenden Ansprüche,
**dadurch gekennzeichnet, dass** an dem der Grundplatte (12) abgewandten Ende des Aufwickelvorsprungs (28) wenigstens ein Niederhalteelement (30) angeordnet ist.

4. Befestigungsvorrichtung nach einem der vorhergehenden Ansprüche,
**dadurch gekennzeichnet, dass** die Grundplatte (12) zwei Aufwickelvorsprünge (28) aufweist.

5. Befestigungsvorrichtung nach einem der vorhergehenden Ansprüche,
**dadurch gekennzeichnet, dass** zwischen den beiden Aufwickelvorsprüngen (28) wenigstens ein Niederhalteelement (32) angeordnet ist, vorzugsweise zwei Niederhalteelemente (32) angeordnet sind.

6. Befestigungsvorrichtung nach einem der vorhergehenden Ansprüche,
**dadurch gekennzeichnet, dass** der Aufwickelvorsprung (28) beabstandet zu der Seitenkante (18) der Grundplatte (12) angeordnet ist.

7. Befestigungsvorrichtung nach einem der vorhergehenden Ansprüche,
**dadurch gekennzeichnet, dass** ausgehend von der Vorderseite (14) wenigstens eine Vertiefung (36), vorzugsweise mehrere Vertiefungen (36), in der Grundplatte (12) angeordnet sind.

8. Befestigungsvorrichtung nach einem der vorhergehenden Ansprüche,
**dadurch gekennzeichnet, dass** der Aufwickelvorsprung (28) in der Vertiefung (36) in der Grundplatte (12) angeordnet ist, insbesondere derart, dass das der Grundplatte (12) abgewandte Ende des Aufwickelvorsprungs (28) nicht über eine Auflagefläche der Grundplatte (12) für das Gerät (100) hinausragt.

9. Befestigungsvorrichtung nach einem der vorhergehenden Ansprüche,
**dadurch gekennzeichnet, dass** die Seitenkante (18) zumindest abschnittsweise offen ausgebildet ist.

10. Befestigungsvorrichtung nach einem der vorhergehenden Ansprüche,
**dadurch gekennzeichnet, dass** insbesondere ausgehend von der Seitenkante (18) eine Ausnehmung (38) in der Grundplatte (12) angeordnet ist.

11. Befestigungsvorrichtung nach einem der vorhergehenden Ansprüche,
**dadurch gekennzeichnet, dass** die Wandbefestigungsöffnungen (20) von der Vorderseite (14) zur Rückseite (16) durchgehend ausgebildet sind.

12. Befestigungsvorrichtung nach einem der vorhergehenden Ansprüche,
**dadurch gekennzeichnet, dass** um wenigstens eine der Wandbefestigungsöffnungen (20) zumindest abschnittsweise ein Steg (22) angeordnet ist.
